# FASCICULE DE BREVET EUROPEEN

(11) **EP 2 067 697 B1**
(45) Date de publication et mention de la délivrance du brevet: **11.08.2010**
(21) Numéro de dépôt: 08170775.4
(22) Date de dépôt: 05.12.2008
(51) Int. Cl.: B64C 13/30, F16C 7/04, G01L 1/26, G01L 5/10, G01B 7/16

(54) **Bielle pour la construction aéronautique et mécanisme comprenant une telle bielle**
Pleuelstange für den Flugzeugbau und eine solche Schubstange umfassender Mechanismus
Connecting rod for aeronautical construction and mechanism comprising such a connecting rod

(30) Priorité: 07.12.2007 FR 0759650
(43) Date de publication de la demande: 10.06.2009
(73) Titulaire: SKF Aerospace France, 26240 Saint-Vallier-sur-Rhone (FR)
(72) Inventeur: Bouillot , Franck - Roland, 07300 Saint-Perey (FR); Richard, Alain - Pierre, 07300 Tournon-sur-Rhone (FR)
(74) Mandataire: Myon, Gérard Jean-Pierre

(56) Documents cités:
- WO-A-2006/006670
- FR-A- 2 599 793
- US-A- 3 120 754
- US-A1- 2004 187 608
- US-A1- 2005 178 215
- US-B1- 6 311 566

## Description

La présente invention concerne une bielle pour la construction aéronautique supportant essentiellement des efforts de traction et/ou de compression et comprenant un capteur à jauges de contraintes pour évaluer ces efforts, ainsi qu'un organe de sécurité pour protéger ce capteur. Par ailleurs, l'invention concerne un mécanisme aéronautique comprenant une telle bielle.

Dans le domaine de la construction aéronautique, il est nécessaire d'évaluer les contraintes mécaniques subies par un mécanisme et, en particulier, par la ou les bielle(s) qui le compose(nt). Une bielle de mécanisme aéronautique comprend généralement un arbre destiné à transmettre des efforts exercés essentiellement en traction et/ou en compression lorsque la bielle est en service. Dans les mécanismes aéronautiques de l'art antérieur, la bielle intègre généralement un ressort linéaire dont l'allongement est directement proportionnel aux efforts subis par la bielle, ce qui permet de mesurer ces efforts. Cependant, l'intégration d'un tel ressort linéaire augmente l'encombrement, notamment axial de la bielle.

Le document US B 6311566 décrit une bielle avec un élément élastiquement déformable et un organe de sécurité constitués de pièces différentes, respectivement un ressort et un écrou d'arrêt.

Dans le domaine de l'industrie mécanique, il existe des pièces soumises à des efforts de traction et/ou de compression qui comprennent un élément élastiquement déformable associé à un capteur à jauges de contraintes, de façon à mesurer une déformation élastique pour évaluer ces efforts. Pour réaliser une mesure précise, l'amplitude de la déformation élastique doit être relativement grande sous les efforts couramment subis en mode de fonctionnement normal.

Toutefois, une bielle de mécanisme aéronautique est dimensionnée pour supporter des efforts critiques, dans un mode de fonctionnement défaillant, très largement supérieurs aux efforts qui s'exercent en fonctionnement normal. Or, de tels efforts critiques risquent d'engendrer une déformation plastique de l'élément élastiquement déformable, ce qui le rend inutilisable et impose son remplacement pour pouvoir réaliser à nouveau des mesures d'efforts.

La présente invention vise notamment à remédier à ces inconvénients, en proposant une bielle, pour la construction aéronautique, permettant, pour un coût et un nombre de composants réduit, d'effectuer des mesures d'efforts précises en

fonctionnement normal, tout en protégeant les composants de la bielle lors d'un fonctionnement défaillant.

A cet effet, la présente invention a pour objet une bielle , pour la construction aéronautique, comprenant au moins un premier ensemble comportant :
- au moins un arbre destiné à transmettre des efforts exercés essentiellement en traction et/ou en compression lorsque la bielle est en service ;
- un élément élastiquement déformable solidarisé audit arbre de façon à reprendre lesdits efforts, ledit élément étant apte à présenter une déformation élastique sous l'effet desdits efforts ;
- au moins un capteur à jauges de contraintes associé audit élément de façon à mesurer ladite déformation élastique pour évaluer lesdits efforts ;
ledit premier ensemble comportant, en outre, un organe de sécurité solidaire dudit élément élastiquement déformable et distant de l'arbre lorsque la bielle est au repos, ledit organe de sécurité étant apte à limiter les mouvements de l'arbre lorsque ladite déformation élastique dépasse une limite déterminée, de façon à transmettre la partie excédentaire desdits efforts, caractérisé en ce que l'élément élastiquement déformable est venu de matière avec l'organe de sécurité.

En d'autres termes, l'organe de sécurité définit des moyens de butée pour l'arbre, lesquels peuvent reprendre la majeure partie des efforts importants supportés par la bielle.

Un tel organe de sécurité permet donc de protéger l'élément élastiquement déformable, en le « court-circuitant » lorsque les efforts dépassent sa limite élastique. L'élément ainsi protégé peut présenter une déformation élastique de grande amplitude en fonctionnement normal, de façon à effectuer des mesures d'efforts précises.

Selon d'autres caractéristiques avantageuses mais facultatives de la présente invention, prises isolément ou selon toute combinaison techniquement admissible :
- l'organe de sécurité comporte une première et une deuxième surfaces d'appui, l'arbre comporte une troisième et une quatrième surfaces d'appui disposées respectivement en regard des première et deuxième surfaces d'appui, les première et troisième surfaces d'appui, d'une part, et les deuxième et quatrième surfaces d'appui, d'autre part, étant séparées, lorsque la bielle est au repos, par des distances respectives inférieures à ladite limite, les première et troisième surfaces d'appui étant aptes à transmettre les efforts exercés en compression lorsque ladite limite est dépassée et les deuxième et quatrième surfaces d'appui étant aptes à transmettre les efforts exercés en traction lorsque ladite limite est dépassée ;
- les première et deuxième surfaces d'appui sont définies par usinage à partir d'une surface de référence commune usinée sur l'organe de sécurité ;
- l'arbre s'étend selon un axe globalement parallèle à la direction d'application desdits efforts et lesdites surfaces d'appui sont globalement planes et normales auxdits efforts ;
- l'élément présente une forme de révolution coaxiale à l'arbre et l'organe de sécurité présente une forme de révolution coaxiale à l'arbre, l'arbre comporte un collet présentant des surfaces axiales opposées et définissant les troisième et quatrième surfaces d'appui, la première surface d'appui est normale à l'axe, l'organe de sécurité est équipé d'une bague d'arrêt définissant la deuxième surface d'appui et l'organe de sécurité et la bague forment un logement pour le collet ;
- l'élément est une membrane, la membrane ayant une forme globalement cylindrique ou tronconique avec un demi-angle au sommet supérieur à 45°, de préférence à 60°;
- l'arbre est vissé sur l'élément, le filetage étant réalisé sur l'arbre ;
- l'arbre est vissé sur l'élément, le taraudage étant réalisé sur l'arbre ;
- la bielle comporte des moyens supplémentaires de solidarisation de l'arbre avec l'élément, tels qu'une goupille ou de la colle disposée sur le filetage ;
- la distance séparant l'arbre et l'organe de sécurité est comprise entre 0,1 mm et 0,4 mm, de préférence entre 0,2 mm et 0,3 mm, en ce que ladite limite de déformation élastique est atteinte pour un effort compris entre 1000 N et 2000 N et l'arbre est apte à transmettre à l'organe de sécurité des efforts atteignant 12000 N ;
- l'élément est réalisé en un matériau à module d'élasticité longitudinal supérieur à 100000 MPa, tel que par exemple le titane de nuance TA6V laminé ;
- la bielle comprend, en outre, un deuxième ensemble semblable au premier ensemble et en ce que les deux organes de sécurité sont fixés de part et d'autre d'une bride centrale, les deux ensembles étant disposés symétriquement par rapport à ladite bride.

Par ailleurs, la présente invention a pour objet un mécanisme aéronautique, caractérisé en ce qu'il comprend une bielle telle qu'exposée ci-dessus.

Enfin, l'invention a pour objet un procédé de fabrication de la bielle ci-dessus, dans lequel on usine, sur l'organe de sécurité, la surface de référence commune, et on réalise par usinage, à partir de ladite surface de référence commune, lesdites première et deuxième surfaces d'appui.

L'invention sera bien comprise et d'autres avantages ressortiront aussi à la lumière de la description qui va suivre, donnée uniquement à titre d'exemples non limitatifs et faite en référence aux dessins annexés, dans lesquels :
- la figure 1 est une coupe longitudinale d'une bielle conforme à l'invention ;
- la figure 2 est une vue à plus grande échelle du détail II à la figure 1;
- la figure 3 est une vue à plus grande échelle du détail III à la figure 2;
- la figure 4 est une vue à plus grande échelle du détail IV à la figure 2; et
- la figure 5 est une coupe longitudinale, à plus grande échelle, d'une variante de la bielle des figures précédentes.

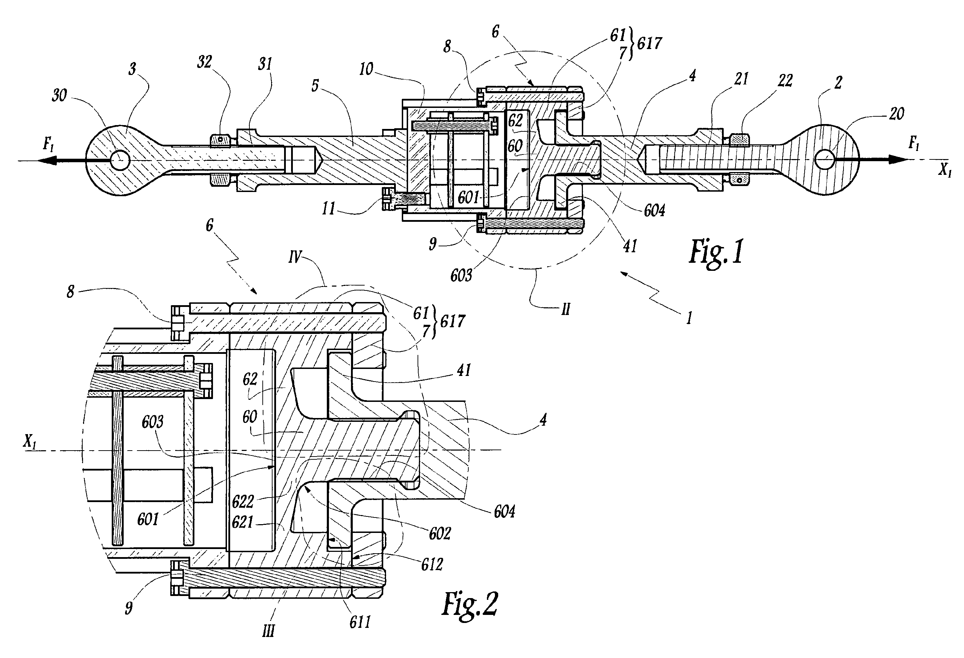

La figure 1 illustre une bielle 1 qui s'étend selon un axe longitudinal X₁. Les extrémités de la bielle 1 sont formées par des embouts respectifs 2 et 3, lesquels sont destinés à être liés à d'autres composants non représentés d'un mécanisme aéronautique. Dans ce but, chaque embout 2 ou 3 est percé d'un trou débouchant 20 ou 30 destiné à recevoir une partie complémentaire d'un autre composant.

La bielle 1 comprend un premier arbre 4 auquel est solidarisé l'embout 2 au moyen d'un filetage 21 et d'un écrou 22. De même, la bielle 1 comprend un deuxième arbre 5 auquel est solidarisé l'embout 3 au moyen d'un filetage 31 et d'un écrou 32. Lorsque la bielle est en service, les arbres 4 et 5 sont destinés à transmettre des efforts de l'embout 2 vers l'embout 3 et réciproquement. De tels efforts s'exercent essentiellement en traction ou en compression. Dans l'exemple de la figure 1, les embouts 2 et 3 sont soumis à une force de traction F₁ qui s'exerce selon l'axe X₁.

Les premier et deuxième arbres 4 et 5 sont reliés entre eux par l'intermédiaire d'un boîtier 6 et d'un capot 10, lesquels sont assemblés au moyen de vis 8 et 9. Le deuxième arbre 5 est solidarisé au capot 10, par exemple au moyen d'une vis 11. Le premier arbre 4 s'étend selon l'axe X₁ qui est globalement parallèle à la direction d'application de la force de traction F₁.

Le boîtier 6 est formé d'une partie centrale 60 et d'une partie périphérique 61. L'adjectif « central » qualifie un objet qui se trouve proche de l'axe X₁, tandis que l'adjectif « périphérique » qualifie un objet qui en est plus éloigné. L'arbre 4 est solidarisé à la partie centrale 60 au moyen d'un taraudage 604, si bien que l'arbre 4 peut transmettre au boîtier 6 des efforts de compression et/ou de traction, tels que la force F₁. Le boîtier 6 et le premier arbre 4 sont ici co-axiaux, car ils présentent tous deux une symétrie de révolution autour de l'axe X₁. Dans l'exemple des figures 1 et 2, le taraudage 604 est réalisé sur l'arbre 4.

Comme le montre la figure 2, les parties centrales 60 et périphérique 61 du boîtier 6 sont reliées par l'intermédiaire d'un élément 62 qui est apte à présenter une déformation élastique lorsque l'arbre 4 transmet la force F₁ à la partie centrale 60. L'élément 62 est venu de matière avec les parties centrales 60 et périphérique 61. L'élément 62 présente une forme globalement tronconique d'axe X₁, dont la partie épaisse 622 est reliée à la partie centrale 60 suivant un congé 602 et dont la partie mince 621 est reliée à la partie périphérique 61. Le demi-angle au sommet du cône est d'environ 75°. En pratique, le demi-angle au sommet du cône est supérieur à 45°, de préférence à 60°. Selon une variante non représentée, l'élément élastiquement déformable a une forme globalement cylindrique et aplatie.

Ainsi, l'élément 62 forme une membrane qui a une forme tronconique relativement aplatie, avec une variation d'épaisseur relativement faible depuis l'axe X₁ jusqu'à sa périphérie. L'élément 62 a donc une forme semblable à un disque plein. Cette construction est particulièrement compacte dans les directions axiale et radiale. La membrane formée par l'élément 62 peut se déformer élastiquement suivant l'axe X₁.

L'élément 62 est plaqué sur, donc associé à, un capteur à jauges de contraintes 603 connu en soi et disposé sur une surface axiale 601 de la partie centrale 60 qui est tournée vers le capot 10. Les jauges de contraintes non représentées du capteur 603 s'étendent radialement depuis l'axe X₁ vers la partie périphérique 61, formant ainsi un pont de jauges complet et permettant de réaliser simultanément plusieurs mesures des efforts appliqués. Le capteur 603 est du type « diaphragme ».

Comme l'élément 62 est en forme de membrane, il peut recevoir plusieurs ponts de jauges adjacents, par exemple deux, pour réaliser des mesures d'efforts avec précision. En pratique, les ponts de jauges sont décalés autour de l'axe X₁ d'un angle compris entre 30° et 60°. L'assemblage du(des) pont(s) de jauges directement sur l'élément 62 confère aussi une compacité axiale relativement élevée à la bielle 1.

Par ailleurs, on peut prévoir des moyens supplémentaires pour solidariser l'arbre 4 avec la partie centrale 60 et l'élément 62, comme une goupille radiale traversant ces deux pièces ou de la colle de type « frein filet » disposée sur le filetage 604. L'emploi d'une goupille offre l'avantage de rendre la qualité de cette solidarisation indépendante des opérations d'assemblage de l'arbre 4 et de l'élément 62.

Lorsque la bielle 1 est en service selon un mode de fonctionnement normal, elle est soumise à un effort de traction F₁ d'intensité modérée, lequel est transmis de l'embout 2 au boîtier 6 via l'arbre 4, puis du capot 10 à l'embout 3 via l'arbre 5. Dans ce cas, l'élément 62 se déforme élastiquement, ce que mesure le capteur à jauges de contraintes 603 disposé sur l'élément 62 et, éventuellement, en partie centrale 60.

Du côté du boîtier 6, le premier arbre 4 comporte un collet 41 qui s'étend radialement depuis l'axe X₁ vers la partie périphérique 61. Le collet 41 présente une forme cylindrique d'axe X₁. Une bague d'arrêt 7 est placée en appui plan contre une surface axiale 612 du boîtier 6 auquel la bague 7 est solidarisée par l'intermédiaire des vis 8 et 9. La bague 7 présente une forme annulaire d'axe X₁ et elle s'étend radialement vers l'axe X₁ au-delà de la surface 612. La partie périphérique 61 du boîtier 6 comporte en outre un épaulement 611 disposé en regard de la partie de la bague 7 qui est saillante vers l'axe X₁. Une surface est ici dénommée « axiale » ou « radiale » suivant l'orientation d'une normale à cette surface.

L'assemblage de la bague 7 avec la partie périphérique 61 du boîtier 6 définit un organe de sécurité 617 qui encadre le collet 41 de l'arbre 4. L'organe de sécurité 617 est donc solidaire de l'élément élastiquement déformable 62. L'élément 62 est venu de matière avec la partie périphérique 61, donc avec l'organe de sécurité 617. L'organe de sécurité 617 présente une symétrie de révolution autour de l'axe X₁. L'organe de sécurité 617, comme l'élément 62, est donc coaxial à l'arbre 4.

La structure monobloc de l'élément 62 et de la partie périphérique 61 de l'organe de sécurité 617 réduit le nombre de pièces nécessaires pour remplir les fonctions d'élasticité et de sécurité. Cette structure simplifie donc les opérations d'assemblage et de maintenance de la bielle 1.

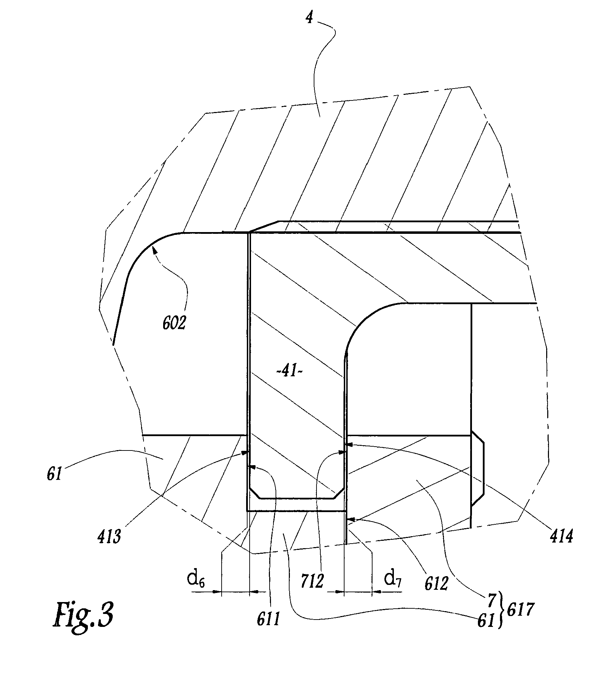

Comme le montre la figure 3, lorsque la bielle 1 est au repos, c'est-à-dire lorsqu'elle n'est soumise à aucun effort de traction ou de compression, la partie périphérique 61 et la bague 7 qui forment l'organe de sécurité 617 sont distantes de l'arbre 4. En d'autres termes, l'organe de sécurité 617 et la bague 7 forment un logement avec jeu pour le collet 41, lequel ne peut pas échapper après l'assemblage de la bielle 1. L'arbre 4, l'élément 62, le capteur 603 et l'organe de sécurité 617 forment un premier ensemble destiné à mesurer précisément et en toute sécurité les efforts subis par la bielle.

Lorsque la bielle est en service et qu'elle subit un effort F₁ modéré, l'élément 62 se déforme élastiquement, ce qui entraîne une élongation des jauges de contraintes du capteur 603, donc une modification de leur résistance électrique qui permet d'évaluer l'effort F₁.

En fonctionnement anormal ou défaillant, l'intensité des efforts exercés sur la bielle, en l'occurrence la force de traction F₁, peut devenir très élevée, par exemple en cas de choc. Dans ce cas, la déformation élastique de l'élément 62 atteint puis dépasse une limite pré-déterminée.

Dès que cette limite est dépassée, l'organe de sécurité 617 limite le mouvement de l'arbre 4 dans le sens de la force F₁. Ainsi, les contraintes mécaniques subies par l'élément 62 se limitent aux contraintes correspondant à cette limite de déformation élastique. La partie excédentaire de la force F1 est transmise de l'arbre 4 à l'organe de sécurité 617, tandis que l'élément 62 supporte une partie limitée de la force F₁. En d'autres termes, le collet 41 joue le rôle d'une « soupape » mécanique qui « court-circuite » l'élément 62 pour transmettre des efforts importants de l'arbre 4 au boîtier 6.

Comme le montre la figure 3, l'organe de sécurité comporte une première surface d'appui 611 formée par l'épaulement de la partie périphérique 61 et une deuxième surface d'appui 712 formée par la partie radiale saillante de la bague 7. Les première 611 et deuxième 712 surfaces d'appui présentent une forme annulaire plane et perpendiculaire à l'axe X₁. Cependant, ces surfaces d'appui peuvent présenter d'autres formes, par exemple planes et inclinées sur l'axe X₁ de manière oblique.

Le collet 41 du premier arbre 4 comporte une troisième surface d'appui 413 et une quatrième surface d'appui 414 qui sont disposées, après assemblage de l'organe de sécurité 617, respectivement en regard des première 611 et deuxième 712 surfaces d'appui. Le collet 41 présente une symétrie cylindrique et les surfaces d'appui 413 et 414 sont planes, axiales et opposées c'est-à-dire tournées l'une vers l'embout 2 et l'autre vers l'embout 3.

Lorsque la bielle est au repos, les première 611 et troisième 413 surfaces d'appui sont séparées par une distance d₆ qui est inférieure à la limite de déformation élastique sélectionnée pour l'élément 62. Par conséquent, aucun effort n'est transmis entre les surfaces d'appui 611 et 413, ni donc entre le boîtier 6 et l'arbre 4, tant que la déformation élastique de l'élément 62 dans la direction longitudinale définie par l'axe X₁ demeure inférieure à cette limite. De même, les deuxième 712 et quatrième surfaces d'appui sont séparées, lorsque la bielle 1 est au repos, par une distance d₇ qui est inférieure à cette limite. Par conséquent aucun effort n'est transmis entre les surfaces d'appui 412 et 414 ni donc entre le boîtier 6 et l'arbre 4, tant que l'allongement de l'élément 62 dans la direction longitudinale définie par l'axe X₁ demeure inférieur à cette limite.

Lorsque la bielle 1 travaille en traction, les surfaces d'appui 712 et 414 se rapprochent et la distance d₇ diminue. A l'inverse, lorsque la bielle 1 travaille en compression, les surfaces d'appui 611 et 413 se rapprochent et la distance d₆ diminue.

Lorsque la limite de déformation élastique de l'élément 62 est dépassée en traction, les surfaces d'appui 712 et 414 entrent en contact et transmettent, de l'arbre 4 au boîtier 6, la force F₁ dont l'intensité est devenue trop grande pour effectuer sa transmission par le seul élément 62.

Inversement lorsque la limite de déformation élastique en compression est dépassée, les surfaces d'appui 611 et 413 entrent en contact et transmettent alors de l'arbre 4 au boîtier 6 les efforts de compression dont l'intensité est trop grande pour le seul élément 62.

Ainsi, les surfaces d'appui 611 et 712 forment des moyens de butée aptes à reprendre des efforts transmis par les surfaces 413 ou 414.

Les surfaces d'appui 611, 712, 413 et 414 permettent donc de protéger l'élément 62 en lui évitant toute déformation plastique. On peut ainsi mesurer les efforts supportés par la bielle 1 en fonctionnement normal, sans risquer l'endommagement de son élément 62 en fonctionnement défaillant.

En pratique, la distance d₆ vaut par exemple environ 0,2 mm et la distance d₇ 0,3 mm. En pratique, les distances d₆ et d₇ peuvent être comprises entre 0,1 mm et 0,4 mm et, de préférence, entre 0,2 mm et 0,3 mm.

L'élément 62 est réalisé en un matériau à module d'élasticité longitudinale (module de Young) élevé, tel que le titane (Ti). Par module d'élasticité longitudinale élevé on entend un module supérieur à 100000 MPa.

Le choix d'un tel matériau et le dimensionnement de l'élément 62 permettent d'obtenir une déformation élastique relativement importante, ce qui augmente la précision des mesures des efforts subis par la bielle 1. Cependant, plus l'élément 62 doit se déformer, plus sa déformation risque de s'approcher de la zone plastique. Cependant, le collet 41 et l'organe de sécurité 617 assurent dans ce cas la protection de l'élément 62.

La limite de déformation élastique de l'élément 62 est ici sélectionnée, en traction et en compression, de façon à être atteinte pour un effort supérieur à celui de la mise en butée du «court-circuit » évoqué ci-dessus. En pratique, cet effort limite peut être défini au-delà de 2000 N. Dans la plage de fonctionnement normal de la bielle 1, où les efforts sont compris entre 0 et 500 N, l'élément 62 permet une précision de ± 10 N sur la mesure des efforts transmis par l'élément 62.

Par ailleurs, le dimensionnement du collet 41 et de l'organe de sécurité 617, c'est-à-dire le dimensionnement des surfaces d'appui 611, 712, 413 et 414, leur permet de transmettre des efforts atteignant 12 000 N.

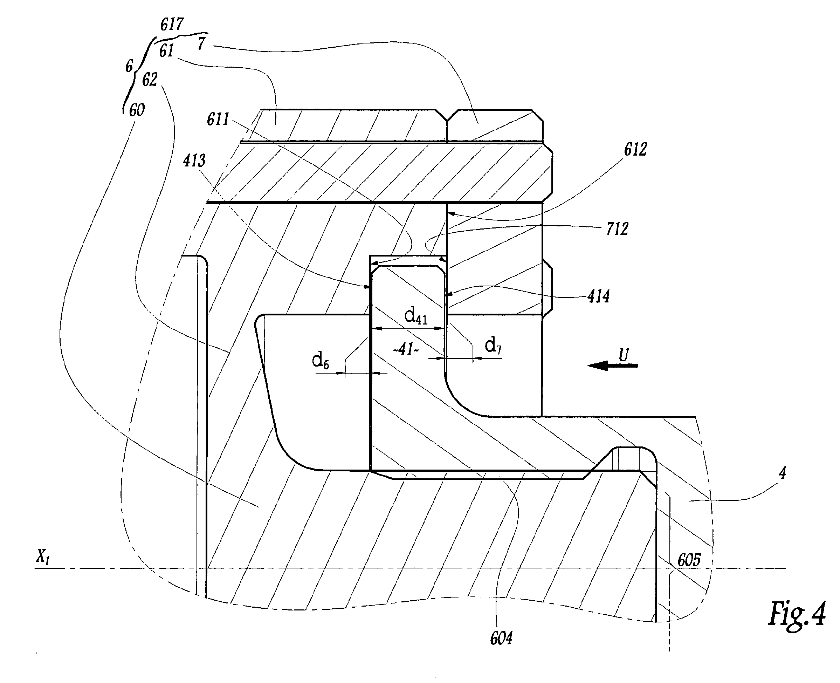

La figure 4 illustre de façon schématique comment usiner l'organe de sécurité 617 et le collet 41. Le sens d'usinage est repéré par la flèche U sur la figure 4. En l'occurrence, les formes du boîtier 6, de la bague 7 et du collet 41 sont relativement faciles, donc économiques, à obtenir tout en garantissant les distances d₆ et d₇. Le boîtier 6 est usiné au moyen d'un tour à commande numérique, ce qui permet une précision de ± 3/100 mm.

On usine d'abord une surface axiale 605 située sur la partie centrale 60 et tournée vers le premier arbre 4. La surface 605 est ensuite utilisée comme surface de référence commune pour l'usinage de la partie périphérique 61 du boîtier 6. On réalise alors une surface annulaire 612 qui est plane et axiale et qui est située à l'extrémité du boîtier 6 du côté de l'arbre 4. On réalise ensuite l'épaulement 611, en prenant toujours la surface 605 comme référence. Puis, on usine le collet 41 en réalisant la cote d₄₁. On doit également réaliser la bague 7 avec une bonne planéité de la deuxième surface d'appui 712, car cette dernière doit être pressée contre la surface 612 lors de l'assemblage de l'organe de sécurité 617.

Dans la mesure où le tournage numérique permet d'obtenir les cotes des surfaces 605, 612 et 611 à ± 3/100 mm, il est facile et peu onéreux de garantir que les distances d₆ et d₇ sont comprises entre 0,2 et 0,3 mm. Après cet usinage, l'assemblage du premier ensemble peut être réalisé simplement et sans aucun réglage nécessaire.

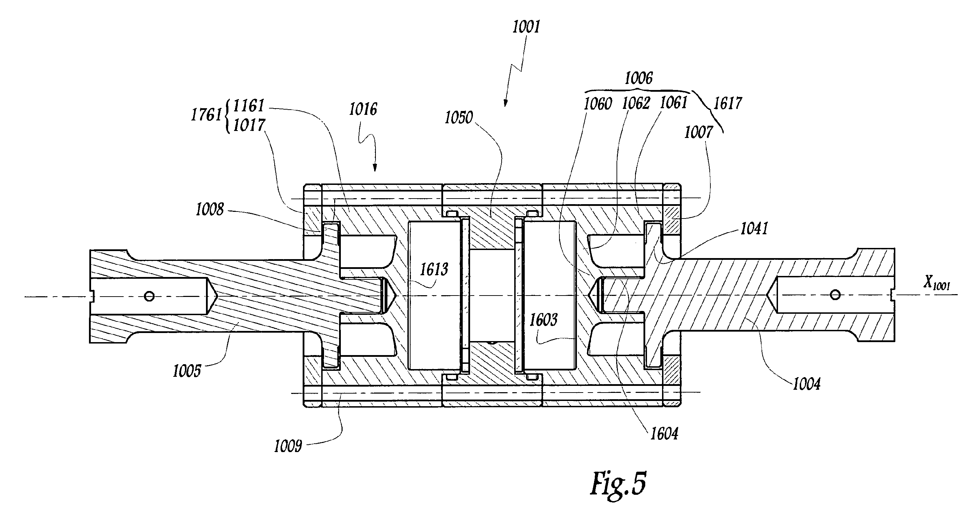

La figure 5 illustre une variante à la bielle 1 des figures 1 à 4. Les éléments de la figure 5 qui sont identiques ou correspondants à ceux des figures 1 à 4 portent la même référence numérique augmentée de 1000. La description de la bielle 1 donnée ci-dessus peut être transposée à la bielle 1000 illustrée à la figure 5.

La bielle 1001 s'étend selon un axe longitudinal X₁₀₀₁. La bielle 1001 ou la bielle 1 peut mesurer environ 23 cm de long et peser environ 1 kg. La bielle 1001 comprend un premier ensemble comportant un premier arbre 1004, un boîtier 1006 et une bague 1007. L'arbre 1004 comporte un collet 1041 et le boîtier 1006 comprend une partie centrale 1060, une partie périphérique 1061 et un élément élastiquement déformable 1062. La partie périphérique 1061 et la bague 1007 forment un organe de sécurité 1617. De plus, le boîtier 1006 est équipé d'un capteur à jauges de contraintes 1603 qui est plaqué sur, donc associé à, l'élément 1062.

La bielle 1001, dont les embouts ne sont pas représentés sur la figure 5, se distingue de la bielle 1 en ce qu'elle comprend, en lieu et place du capot 10 et de l'arbre 5, un deuxième ensemble semblable au premier ensemble de la bielle 1, et qui est monté de manière symétrique par rapport au plan de section médiane de la bielle 1001. En d'autres termes, le deuxième ensemble figuré à gauche sur la figure 5 est monté tête-bêche par rapport au premier ensemble figuré à droite sur la figure 5. Ce deuxième ensemble comporte ainsi un arbre 1005, un boîtier 1016, une bague 1017 et un capteur à jauges de contraintes 1613 respectivement semblables à l'arbre 1004, au boîtier 1006, à la bague 1007 et au capteur 1603. La bague 1017 forme, avec une partie périphérique 1161 du boîtier 1016, un organe de sécurité 1761 semblable à l'organe 1617.

Les boîtiers 1006 et 1007 sont solidarisés de part et d'autre d'une bride centrale 1050, par exemple aux moyens de vis 1008 et 1009 représentées par leurs traits d'axes sur la figure 5. Les deux ensembles, de droite et de gauche, sont donc disposés symétriquement par rapport à la bride centrale 1050. Comme la bielle 1001 est équipée de deux capteurs 1603 et 1613, elle permet de réaliser deux séries de mesure indépendantes, tout en présentant un assemblage relativement compact. Les mesures réalisées par le capteur 1603 peuvent servir à réguler le mécanisme aéronautique équipé de la bielle 1001, tandis que les mesures réalisées par les capteurs 1613 servent à vérifier la conformité des mesures effectuées par le capteur 1603. Ainsi, si l'un des capteurs 1603 et 1613 ne fonctionne plus, par exemple si l'élément 1062 se déforme plastiquement, la différence de mesure entre les capteurs 1613 et 1603 signale alors la défaillance du capteur.

Par ailleurs, la bielle 1001 se distingue de la bielle 1 en ce que l'arbre 1004 porte un filetage 1604, alors que l'arbre 4 porte un taraudage 604. Cette configuration de l'arbre 1004 présente l'avantage de garantir le fait que l'organe de sécurité 1617 reprend les efforts transmis par l'arbre 1004, en cas de rupture de la liaison entre l'arbre 1004 et la partie centrale 1060. En effet, dans le cas de la bielle 1001, la rupture risque de se produire sur la section annulaire de la partie centrale 1060 au niveau de la fin du taraudage. L'arbre 1004 demeure intègre, si bien qu'il peut transmettre des efforts à l'organe de sécurité 1617.

De plus, la simplicité de la géométrie des composants de la bielle 1 ou de la bielle 1001 permet une adaptation aisée de la plage de mesure d'efforts lorsque l'on souhaite réaliser des mécanismes de dimensions différentes.

## Revendications

1. Bielle (1 ; 1001), pour la construction aéronautique, comprenant au moins un premier ensemble comportant :
- au moins un arbre (4 ; 1004) destiné à transmettre des efforts (F₁) exercés essentiellement en traction et/ou en compression lorsque la bielle (1 ; 1001) est en service ;
- un élément élastiquement déformable (62; 1062) solidarisé audit arbre (4 ; 1004) de façon à reprendre lesdits efforts (F₁), ledit élément élastiquement déformable (62 ; 1062) étant apte à présenter une déformation élastique sous l'effet desdits efforts (F₁) ;
- au moins un capteur à jauges de contraintes (603 ; 1603) associé audit élément élastiquement déformable (62 ; 1062) de façon à mesurer ladite déformation élastique pour évaluer lesdits efforts (F₁) ;
ledit premier ensemble comportant, en outre, un organe de sécurité (617 ; 1617) solidaire dudit élément élastiquement déformable (62 ; 1062) et distant de l'arbre (4 ; 1004) lorsque la bielle (1 ; 1001) est au repos, ledit organe de sécurité (617 ; 1617) étant apte à limiter les mouvements de l'arbre (4 ; 1004) lorsque ladite déformation élastique dépasse une limite déterminée, de façon à transmettre la partie excédentaire desdits efforts (F₁), **caractérisée en ce que** l'élément élastiquement déformable (62 ; 1062) est venu de matière avec l'organe de sécurité (617 ; 1617).

2. Bielle (1 ; 1001) selon la revendication 1, **caractérisée en ce que** ledit organe de sécurité (617 ; 1617) comporte une première (611) et une deuxième (712) surfaces d'appui, **en ce que** l'arbre (4 ; 1004) comporte une troisième (413) et une quatrième (414) surfaces d'appui disposées respectivement en regard des première (611) et deuxième (712) surfaces d'appui, les première (611) et troisième (413) surfaces d'appui, d'une part, et les deuxième (712) et quatrième (414) surfaces d'appui, d'autre part, étant séparées, lorsque la bielle (1 ; 1001) est au repos, par des distances respectives (d₆, d₇) inférieures à ladite limite, les première (611) et troisième (413) surfaces d'appui étant aptes à transmettre les efforts exercés en compression lorsque ladite limite est dépassée et les deuxième (712) et quatrième (414) surfaces d'appui étant aptes à transmettre les efforts exercés en traction (F₁) lorsque ladite limite est dépassée.

3. Bielle (1 ; 1001) selon la revendication 2, **caractérisée en ce que** les première (611) et deuxième (712) surfaces d'appui sont définies par usinage à partir d'une surface de référence (605) commune usinée sur l'organe de sécurité (617 ; 1617).

4. Bielle (1 ; 1001) selon la revendication 2 ou 3, **caractérisée en ce que** ledit arbre (4 ; 1004) s'étend selon un axe (X₁ ; X₁₀₀₁) globalement parallèle à la direction d'application desdits efforts (F₁) et **en ce que** lesdites surfaces d'appui (611, 712, 413, 414) sont globalement planes et normales auxdits efforts (F₁).

5. Bielle (1 ; 1001) selon la revendication 4, **caractérisée en ce que** l'élément élastiquement déformable (62 ; 1062) présente une forme de révolution coaxiale à l'arbre (4 ; 1004), **en ce que** l'organe de sécurité (617 ; 1617) présente une forme de révolution coaxiale à l'arbre (4 ; 1004), **en ce que** l'arbre (4 ; 1004) comporte un collet (41 ; 1041) présentant des surfaces axiales opposées et définissant les troisième (413) et quatrième (414) surfaces d'appui, **en ce que** la première surface d'appui (611) est normale à l'axe, **en ce que** l'organe de sécurité (617 ; 1617) est équipé d'une bague d'arrêt (7 ; 1007) définissant la deuxième surface d'appui (712) et **en ce que** l'organe de sécurité (617 ; 1617) et la bague (7 ; 1007) forment un logement pour le collet (41 ; 1041).

6. Bielle (1 ; 1001) selon la revendication 5, **caractérisée en ce que** l'élément élastiquement déformable (62 ; 1062) est une membrane, la membrane ayant une forme globalement cylindrique ou tronconique avec un demi-angle au sommet supérieur à 45°, de préférence à 60°.

7. Bielle (1001) selon l'une des revendications précédentes, **caractérisée en ce que** l'arbre (1004) est vissé sur l'élément élastiquement déformable (1062), le filetage (1604) étant réalisé sur l'arbre (1004).

8. Bielle (1) selon l'une des revendications 1 à 6, **caractérisée en ce que** l'arbre (4) est vissé sur l'élément élastiquement déformable (62), le taraudage (604) étant réalisé sur l'arbre (4).

9. Bielle (1 ; 1001) selon l'une des revendications 7 ou 8, **caractérisée en ce qu'**elle comporte des moyens supplémentaires de solidarisation de l'arbre avec l'élément élastiquement déformable (62 ; 1062), tels qu'une goupille ou de la colle disposée sur le filetage (604 ; 1604).

10. Bielle (1 ; 1001) selon l'une des revendications précédentes, **caractérisée en ce que** la distance (d₆, d₇) séparant l'arbre (4 ; 1004) et l'organe de sécurité (617 ; 1617) est comprise entre 0,1 mm et 0,4 mm, de préférence entre 0,2 mm et 0,3 mm, **en ce que** ladite limite de déformation élastique est atteinte pour un effort (F₁) compris entre 1000 N et 2000 N et **en ce que** l'arbre (4 ; 1004) est apte à transmettre à l'organe de sécurité (617 ; 1617) des efforts atteignant 12 000 N.

11. Bielle (1 ; 1001) selon l'une des revendications précédentes, **caractérisée en ce que** l'élément élastiquement déformable (62 ; 1062) est réalisé en un matériau à module d'élasticité longitudinal supérieur à 100000 MPa, tel que par exemple le titane de nuance TA6V.

12. Bielle (1001) selon l'une des revendications précédentes, **caractérisée en ce qu'**elle comprend, en outre, un deuxième ensemble semblable au premier ensemble et **en ce que** les deux organes de sécurité (1617, 1761) sont fixés de part et d'autre d'une bride centrale (1050), les deux ensembles étant disposés symétriquement par rapport à ladite bride (1050).

13. Mécanisme aéronautique, **caractérisé en ce qu'**il comprend une bielle (1 ; 1001) selon l'une des revendications précédentes.

14. Procédé de fabrication d'une bielle selon l'une des revendications 3 à 12, dans lequel on usine, sur l'organe de sécurité (617 ; 1617), la surface de référence commune (605), et on réalise par usinage, à partir de ladite surface de référence commune, lesdites première (611) et deuxième (712) surfaces d'appui.

## Claims

1. Connecting rod (1; 1001) for aircraft construction comprising at least one first assembly comprising :
- at least one shaft (4; 1004) for transmitting loads (F₁) exerted substantially in traction and/or in compression when the connecting rod (1; 1001) is in operation;
- an elastically deformable element (62; 1062) fixed to said shaft (4; 1004) so as to absorb said loads (F₁), said elastically deformable element (62; 1062) being configured to exhibit elastic deformation under the action of said loads (F₁);
- at least one strain gauge sensor (603; 1603) associated with said elastically deformable element (62; 1062) so as to measure said elastic deformation to evaluate said loads (F₁);
said first assembly further comprising a safety member (617; 1617) fixed to said elastically deformable element (62; 1062) and remote from the shaft (4; 1004) when the connecting rod (1; 1001) is at rest, said safety member (617; 1617) being configured to limiting the movements of the shaft (4; 1004) when said elastic deformation exceeds a specific limit, so as to transmit the excess portion of said loads (F₁),
**characterized in that** the elastically deformable element (62; 1062) is made in one piece with the safety member (617; 1617).

2. Connecting rod (1; 1001) according to Claim 1, **characterized in that** said safety member (617; 1617) comprises a first (611) and a second (712) bearing surfaces, **in that** the shaft (4; 1004) comprises a third (413) and a fourth (414) bearing surfaces arranged respectively opposite the first (611) and second (712) bearing surfaces, and the first (611) and third (413) bearing surfaces, on the one hand, and the second (712) and fourth (414) bearing surfaces, on the other hand, being separated when the connecting rod (1; 1001) is at rest, by distances (d₆, d₇) which are respectively less than said limit, the first (611) and third (413) bearing surfaces being configured to transmit the loads exerted in compression when said limit is exceeded and the second (712) and fourth (414) bearing surfaces being configured to transmit the loads exerted in traction (F₁) when said limit is exceeded.

3. Connecting rod (1; 1001) according to Claim 2, **characterized in that** the first (611) and second (712) bearing surfaces are defined by machining from a common reference surface (605), machined on the safety member (617; 1617).

4. Connecting rod (1; 1001) according to Claim 2 or 3, **characterized in that** said shaft (4; 1004) extends along an axis (X₁; X₁₀₀₁) generally parallel to the direction of application of said loads (F₁) and **in that** said bearing surfaces (611, 712, 413, 414) are generally planar and perpendicular to said loads (F₁).

5. Connecting rod (1; 1001) according to Claim 4, **characterized in that** the elastically deformable element (62; 1062) has a form of revolution which is coaxial to the shaft (4 ; 1004), **in that** the safety member (617; 1617) has a form of revolution which is coaxial to the shaft (4; 1004), **in that** the shaft (4; 1004) comprises a collar (41; 1041) having opposing axial surfaces defining the third (413) and fourth (414) bearing surfaces, **in that** the first bearing surface (611) is perpendicular to the axis (X₁; X₁₀₀₁), **in that** the safety member (617; 1617) is provided with a retaining ring (7; 1007) defining the second bearing surface (712) and **in that** the safety member (617; 1617) and the ring (7; 1007) form a housing for the collar (41; 1041).

6. Connecting rod (1 ; 1001) according to claim 5, **characterized in that** the elastically deformable element (62 ; 1062) is a membrane, the membrane having a form generally cylindrical or frustoconical with a half-point angle greater than 45°, preferably than 60°.

7. Connecting rod (1001) according to one of the preceding claims, **characterized in that** the shaft (1004) is screwed to the elastically deformable element (1062), the threaded portion (1604) being made on the shaft (1004).

8. Connecting rod (1) according to one of Claims 1 to 7, **characterized in that** the shaft (4) is screwed to the elastically deformable element (62), the internal threaded portion (604) being made on the shaft (4).

9. Connecting rod (1; 1001) according to one of Claims 8 or 9, **characterized in that** it comprises additional means for fixing the shaft to the elastically deformable element (62; 1062), such as a pin or adhesive arranged on the threaded portion (604; 1604).

10. Connecting rod (1; 1001) according to one of the preceding claims, **characterized in that** the distance (d₆, d₇) separating the shaft (4; 1004) and the safety member (617; 1617) is between 0.1 mm and 0.4 mm, preferably between 0.2 mm and 0.3 mm, **in that** said elastic deformation limit is reached for a load (F₁) between 1000 N and 2000 N and **in that** the shaft (4; 1004) is configured to transmit loads of up to 12000 N to the safety member (617; 1617).

11. Connecting rod (1; 1001) according to one of the preceding claims, **characterized in that** the elastically deformable element (62; 1062) is made from a material with a longitudinal modulus of elasticity greater than 100000 MPa, such as for example TA6V titanium alloy.

12. Connecting rod (1001) according to one of the preceding claims, **characterized in that** it further comprises a second assembly similar to the first assembly and **in that** the two safety members (1617, 1761) are fixed on both sides of a central flange (1050), the two assemblies being arranged symmetrically relative to said flange (1050).

13. Aircraft mechanism, **characterized in that** it comprises a connecting rod (1; 1001) according to one of the preceding claims.

14. Method for manufacturing a connecting rod according to one of Claims 3 to 12, wherein the common reference surface (605) is machined on the safety member (617; 1617) and said first (611) and second (712) bearing surfaces are made by machining from said common reference surface.

## Patentansprüche

1. Koppelstange (1; 1001) für den Flugzeugbau, mindestens eine erste Anordnung umfassend, die aufweist:
- mindestens eine Welle (4; 1004), die vorgesehen ist, Kräfte (F₁) zu übertragen, die im Wesentlichen als Zug und/oder als Druck ausgeübt werden, wenn die Koppelstange (1; 1001) in Betrieb ist;
- ein deformierbares elastisches Element (62; 1062), das mit der Welle (4; 1004) verbunden ist, um die Kräfte (F₁) aufzunehmen, wobei das deformierbare elastische Element (62; 1062) geeignet ist, eine elastische üerformung unter der Wirkung der Kräfte (F₁) aufzuweisen;
- mindestens einen Sensor (60; 1603) mit Dehnungsmessstreifen, der dem deformierbaren elastischen Element (62; 1062) zugeordnet ist, um die elastische Verformung für die Auswertung der Kräfte (F₁) zu messen;
wobei die erste Anordnung außerdem ein Sicherheitsorgan (617; 1617) aufweist, das mit dem deformierbaren elastischen Element (62; 1062) verbunden ist und zu der Welle (4; 1004) beabstandet ist, wenn die Koppelstange (1; 1001) in Ruhestellung ist, wobei das Sicherheitselement (617; 1617) geeignet ist, die Bewegungen der Welle (4; 1004) zu begrenzen, wenn die elastische Verformung einen bestimmten Grenzwert überschreitet, um den überschüssigen Teil der Kräfte (F₁) zu übertragen, **dadurch gekennzeichnet, dass** das deformierbare elastische Element (62; 1062) aus einem Stück mit dem Sicherheitsorgan (617; 1617) hergestellt ist.

2. Koppelstange (1; 1001) nach Anspruch 1, **dadurch gekennzeichnet, dass** das Sicherheitsorgan (617; 1617) eine erste (611) und eine zweite (712) Auflagefläche aufweist, dass die Welle (4; 1004) eine dritte (413) und eine vierte ((414) Auflagefläche aufweist, die jeweils gegenüberliegend zur ersten (611) und zweiten (712) Auflagefläche angeordnet sind, wobei die erste (611) und die dritte (413) Auflagefläche einerseits und die zweite (712) und vierte (414) Auflagefläche andererseits getrennt sind, wenn die Koppelstange (1; 1001) in der Ruhestellung ist, durch jeweilige Abstände (d₆, d₇) kleiner als der Grenzwert, wobei die erste (611) und die dritte (413) Auflagefläche geeignet sind, die als Druck ausgeübten Kräfte zu übertragen, wenn der Grenzwert überschritten ist und die zweite (712) und vierte (414) Auflagefläche geeignet sind, die als Zug ausgeübten Kräfte (F₁) zu übertragen, wenn der Grenzwert überschritten ist.

3. Koppelstange (1; 1001) nach Anspruch 2, **dadurch** gekenntzeichnet, dass die erste (611) und zweite (712) Auflagefläche durch Bearbeitung von einer gemeinsamen Referenzfläche (605) definiert sind, die an dem Sicherheitsorgan (617; 1617) angearbeitet ist.

4. Koppelstange (1; 1001) nach Anspruch 2 oder 3, **dadurch gekennzeichnet, dass** die Welle (4; 1004) sich gemäß einer im Wesentlichen zu der Richtung der Aufbringung der Kräfte (F₁) parallelen Achse (X₁; X₁₀₀₁) erstreckt und dass die Auflageflächen (611, 712, 413, 414) im Wesentlichen eben und senkrecht zu den Kräften (F₁) sind.

5. Koppelstange (1; 1001) nach Anspruch 4, **dadurch gekennzeichnet, dass** das deformierbare elastische Element (62; 1062) eine Rotationsform koaxial zur Welle (4; 1004) aufweist, dass das Sicherheitsorgan (617; 1617) eine Rotationsform koaxial zur Welle (4; 1004) aufweist, dass die Welle (4; 1004) einen Bund (41; 1041) umfasst, der entgegengesetzte axiale Flächen aufweist und die dritte (413) und vierte (414) Auflagefläche definiert, dass die erste Auflagefläche (611) senkrecht zur Achse liegt, dass das Sicherheitsorgan (617; 1617) mit einem Anschlagring (7; 1007) ausgerüstet ist, der die zweite Auflagefläche (712) definiert und dass das Sicherheitsorgan (617; 1617) und der Ring (7; 1007) eine Aufnahme für den Bund (41; 1041) bilden.

6. Koppelstange (1; 1001) nach Anspruch 5, **dadurch gekennzeichnet, dass** das deformierbare elastische Element (62; 1062) eine Membran ist, wobei die Membran eine im Wesentlichen zylindrische oder kegelstumpfartige Form mit einem Halbwinkel am oberen Scheitelpunkt von größer 45°, vorzugsweise größer 60°, hat.

7. Koppelstange (1001) nach einem der vorhergehenden Ansprüche, **dadurch gekennzeichnet, dass** die Welle (1004) auf das deformierbare elastische Element (1062) aufgeschraubt ist, wobei das Außengewinde (1604) der Welle (1004) hergestellt ist.

8. Koppelstange (1) nach einem der Ansprüche 1 bis 6, **dadurch gekennzeichnet, dass** die Welle (4) auf das deformierbare elastische Element (62) geschraubt ist, wobei das Innengewinde (604) an der Welle (4) realisiert ist.

9. Koppelstange (1; 1001) nach einem der Ansprüche 7 oder 8, **dadurch gekennzeichnet, dass** sie zusätzliche Mittel zur Verbindung der Welle mit dem deformierbaren elastischen Element (62; 1062), wie einen Arretierstift oder Klebstoff, der auf das Außengewinde (604; 1604) aufgebracht ist, aufweist.

10. Koppelstange (1; 1001) nach einem der vorhergehenden Ansprüche, **dadurch gekennzeichnet, dass** die die Welle (4; 1004) von dem Sicherheitselement (617; 1617) trennende Distanz (d₆, d₇) zwischen 0,1 mm und 0,4 mm, vorzugsweise zwischen 0,2 mm und 0,3 mm liegt, dass der Grenzwert der elastischen Verformung bei einer Kraft (F₁) erreicht wird, die zwischen 1000 N und 2000 N lieg,t und dass die Welle (4; 1004) geeignet ist, an das Sicherheitsorgan (617; 1617) Kräfte bis 12000 N zu übertragen.

11. Koppelstange (1; 1001) nach einem der vorhergehenden Ansprüche, **dadurch gekennzeichnet, dass** das deformierbare elastische Element (62; 1062) aus einem Material hergestellt ist, das einen Längselastizitätsmodul größer als 100000 MPa hat, wie beispielsweise Titan der Sorte TA6V.

12. Koppelstange (1001) nach einem der vorhergehenden Ansprüche, **dadurch gekennzeichnet, dass** sie darüber hinaus eine zweite Anordnung gleich der ersten Anordnung aufweist und dass die zwei Sicherheitsorgane (1617, 1761) zu beiden Seiten eines zentralen Flansches (1050) befestigt sind, wobei die zwei Anordnungen symmetrisch in Bezug auf den Flansch (1050) angeordnet sind.

13. Aeronautischer Mechanismus, **dadurch gekennzeichnet, dass** er eine Koppelstange (1; 1001) nach einem der vorhergehenden Ansprüche umfasst.

14. Verfahren zur Herstellung einer Koppelstange nach einem der Ansprüche 3 bis 12, bei dem man die gemeinsame Referenzfläche (605) an dem Sicherheitsorgan (617; 1617) bearbeitet und man durch Bearbeitung, ausgehend von der gemeinsamen Referenzfläche, die erste (611) und zweite (712) Auflagefläche herstellt.
